## Europäisches Patentamt
### European Patent Office
### Office européen des brevets

Veröffentlichungsnummer: **0 286 966**
**A2**

# EUROPÄISCHE PATENTANMELDUNG

Anmeldenummer: **88105498.5**

Int. Cl.⁴: **B32B 27/16 , B32B 5/20**

Anmeldetag: **07.04.88**

Priorität: **17.04.87 DE 3713178**

Veröffentlichungstag der Anmeldung:
**19.10.88 Patentblatt 88/42**

Benannte Vertragsstaaten:
**AT BE CH DE ES FR GB IT LI NL**

Anmelder: **BAYER AG**
**Konzernverwaltung RP Patentabteilung**
**D-5090 Leverkusen 1 Bayerwerk(DE)**

Erfinder: **Hocker, Jürgen, Dr.**
**Eichenweg 6**
**D-5060 Bergisch Gladbach 2(DE)**
Erfinder: **Faehndrich, Jürgen**
**Max-Beckmann-Strasse 53**
**D-5090 Leverkusen 1(DE)**
Erfinder: **Hespe, Hans, Dr.**
**2640 Fairgreen Drive**
**Pittsburgh, PA 15241(US)**
Erfinder: **Sirinyan, Kirkor, Dr.**
**Humperdinckstrasse 12**
**D-5060 Bergisch Gladbach 2(DE)**
Erfinder: **Wecker, Dieter, Dipl.-Ing.**
**Niessenstrasse 45**
**D-4150 Krefeld 1(DE)**

Verfahren zur Herstellung eines Verbundsystems aus einem gummielastischen Material und einer Polyurethanschaumstoff-Schicht.

Ein Verbundsystem aus einem gummielastischen Material und einer Polyurethanschaumstoff-Schicht wird hergestellt. indem man die Oberfläche des gummielastischen Materials einer Plasmabehandlung aussetzt und danach an sie eine Polyurethanschaumstoff-Schicht anschäumt.

EP 0 286 966 A2

## Verfahren zur Herstellung eines Verbundsystems aus einem gummielastischen Material und einer Polyurethanschaumstoff-Schicht

Die Auflösung chemischer Reaktionen durch Plasmen ist schon seit langem bekannt (s. beispielsweise H.V. Boenig Plasma Science and Technologie, Carl Hanser Verlag, München, Wien (1982)). Die Wechselwirkungen von Plasmen mit Substratoberflächen sind vielfältig und komplex. Dabei kann die Substratoberfläche je nach dem verwendeten Gas gereinigt, gespalten oder durch reaktive Atome geätzt werden, was beispielsweise in der Halbleiterfertigung intensiv genützt wird (s. beispielsweise M. Verzugopalan et al.: Plasma Chemistry III, Topics in Current Chemistry 94, Springer Verlag, Berlin (1980)). Bekanntlich tritt im Plasma eine intensive UV-Bestrahlung auf. Diese unerwünschte UV-Strahlung kann bei bestimmten Polymerisaten zu Vernetzungsreaktionen an bzw. auf der Substratoberfläche führen. Hierbei wird der Grad der Vernetzung um so höher, je UV-empfindlicher ein Material ist. Bekannterweise sind gummielastische Materialien auf Basis von Kautschuken wie beispielsweise Polybutadiene, Polyisoprene usw. bedingt durch die ungesättigen $-C = C-$ Doppelbindungen UV-empfindlicher als nicht gummielastische Polymerisate wie beispielsweise Polyethylene, Polypropylene und Polyacrylnitrile.

Es ist weiterhin bekannt, daß eine Erhöhung des Vernetzungsgrades und der damit verbundenen Dichte der Polymeroberfläche zu einer Haftreduzierung der anschließend aufgebrachten Auflagen führt.

Das Aufschäumen von haftfesten Polyurethan-Auflagen auf gummielastischen Schuhsohlen ist ein immer noch nicht elegant gelöstes Problem.

Zum Aufbringen von gut haftenden geschäumten Polyurethan-Auflagen ist bisher ein Entfetten und anschließend ein naßchemisches Ätzen der Gummioberfläche mit umweltbelastenden Oxidantien und anschließend das Aufbringen einer Klebeschicht, die vor dem Anschäumen der PU-Schicht mittels Wärme aktiviert werden muß, erforderlich. Eine naßchemische Oxidantienbehandlung der Gummioberfläche hat den weiteren Nachteile, daß sie zur Bildung von Rissen und Vakuolen an der Gummioberfläche führt, was die mechanischen Eigenschaften bzw. Langzeitstabilität des PU-Gummiverbundes negativ beeinflußt.

Aus der Literatur geht hervor, daß beispielsweise zur Vorbehandlung von ABS-(Acrylnitril-, Butadien-und Styrol) Pfropfcopolymerisaten eingesetzte wäßrige Oxidantien die kautschukelastischen Polybutadienteilchen abbeizen, so daß es zur Bildung von Kavernen und Vakuolen an der ABS-Oberfläche kommt. An diese Vukuolen verankern sich die im zweiten Schritt abgeschiedenen Auflagen wie Metalle und Kunststoffe fest. Bei diesen Systemen wird die so erzielte Haftung mittels der Druckknopf-Theorie erklärt (s. beispielsweise R. Weiner Kunststoff-Galvanisierung, Eugen G. Leuze Verlag, Saulgau/Württ. (1973)).

Für die Haftung der Polyurethan-Auflagen an der vorgebeizten Gummioberfläche ist auch der besagte Haftmechanismus relevant. Die durch naßchemisches Ätzen erzielten Vakuolen und Kavernen weisen eine mittlere Größe von merhreren $\mu$m auf und können sogar bei einer 200-fachen Vergrößerung mit Hilfe eines Rasterelektronenmikroskops nachgewiesen werden.

Aufgabe der Erfindung war eine Polyurethanschaumstoff-Schicht auf der Oberfläche eines gummielastischen Materials, z.B. auf Kautschuksohlen, haftfest aufzubringen, ohne die Materialoberfläche vorher mit üblichen oxidierenden flüssigen Medien zu ätzen bzw. oxidativ aufzurauhen.

Diese Aufgabe wird überraschenderweise dadurch gelöst, indem man die Oberfläche gummielastischen Materials einer Plasmabehandlung unterwirft und dann an sie eine Polyurethan-Schaumstoffschicht anschäumt.

Gegenstand der Erfindung ist somit ein Verfahren zur Herstellung eines Verbundsystems aus einem gummielastischen Material und einer Polyurethanschaumstoff-Schicht, das darin besteht, daß man die Oberfläche des gummielastischen Materials einer Plasmabehandlung aussetzt und danach an sie eine Polyurethanschaumstoff-Schicht anschäumt.

Nach einer bevorzugten Ausführungsform der Erfindung entfettet man die Oberfläche des gummielastischen Materials vor der Plasmabehandlung mit einem nicht ätzenden Lösungsmittel.

Die Plasmabehandlung wird vorzugsweise im Hochfrequenz-Plasma, mit Mikrowellen oder in einem kombinierten Hochfrequenz-Plasma mit Magnetfeldunterstützung vorgenommen. Als Plasmagase werden bevorzugt Ar, He, $O_2$, $O_3$, $N_2$, $SO_3$, $SO_2$, $CF_4$ oder $CF_2 = CF_2$ bzw. ihre Mischungen miteinander eingesetzt.

Die Erfindung betrifft ferner auch Verbundsysteme aus einem gummielastischen Material und einer Polyurethan-Schaumstoff-Schicht, die nach dem erfindungsgemäßen Verfahren erhältlich sind.

Schließlich betrifft die Erfindung auch die Verwendung dieser Verbundsysteme zur Herstellung von Schuhsohlen und als Dämmstoffe.

Überraschenderweise bleibt die Geometrie der Kunststoffoberfläche durch die Plasmabehandlung unverändert.

Ferner ist es überraschend, daß durch die Plasmabehandlung trotz der dadurch bewirkten Erhöhung des Vernetzungsgrades bzw. der Dichte der Materialoberfläche eine gute Haftung zwischen dem gummielastischen Material und der Schaumstoffschicht erzielt wird.

Es wurde weiterhin überraschenderweise gefunden, daß eine weitere zusätzliche Haftverbesserung erzielt wird, wenn die Oberfläche des gummielastischen Materials mit polaren oder unpolaren Lösemitteln im Verlaufe von 10 Sec. bis zu mehreren Minuten vorbehandelt wird.

Hierzu können nicht ätzende Flüssigkeiten wie Wasser; Alkohole vorzugsweise Ethanol, Methanol und Isopropanol; Ketone wie Aceton und Methylethylketon, Chlorkohlenwasserstoffe wie $CCl_2 = CCl_2$, $CCl_4$, $CH_3-CCl_3$ und $CCl_2H-CCl_2H$; Kohlenwasserstoffe wie n-Hexan, n-Pentan, Ligorin, Petrolether und Waschbenzin; Dimethylformamid, Dimethylsulfoxid bzw. deren Mischung untereinander eingesetzt werden. Zur Erhöhung der Reinigungswirkung können diese Lösemittel mit neutralen, anionischen und kationischen Tensiden bzw. mit quarternären Aminen, z.B. in Mengen von 0,1 bis 5,0 Gew.-% versetzt werden. In diesem Zusammenhang sei auf Tetrabuthylammoniumbromid, Dimethylbenzylammoniumchlorid, Benzoesulfonsäure-Na-Salz, Isononylphenol-heptaglykolether hingewiesen.

Das erfindungsgemäße Verfahren hat folgende wichtige Vorteile gegenüber dem herkömmlichen Vorbehandeln mit oxidierenden Medien:
- Die mechanische Eigenschaften des gummielastischen Materials werden durch die Plasmabehandlung nicht negative beeinflußt.
- Die nach dem erfindungsgemäßen Verfahren aufgebrachten Polyurethanschaumstoff-Schichten weisen eine Haftfestigkeit nach DIN 53 273 ≧20 N/cm auf.
- Hierbei entstehen keine umweltbelastende Abwasserprobleme.
- Die Plasmabehandlung ist mit geringerem Aufwand verbunden.

Die Plasmabehandlung ist an sich bekannt. Zur Durchführung der Plasmabehandlung sind sowohl herkömmliche Plasmaanlagen, wie beispielsweise HF(Hochfrequenz)-Plasma im Frequenzbereich von beispielsweise 27,12 bis 13,56 MHz, als auch Mikrowellenplasmaanlagen im Frequenzbereich beispielsweise von 2,45 GHz (v. beispielsweise M. Neusch et.al.: Vacuum 34, 959 (1984); H. Yasuda: Plasma Polymerisation, Academic Press, Inc. New York (1985); B. Jansen et al:

Macromol. Chem., Macromol. Symp. 5 Seiten 237-244 (1986); I.H. Coopes et al: J. Macromol. Sci. -Chem., A 17(2), Seiten 217-226 (1982); EP-A-0249 198, EP-A-0179 636 und GB-A-2 053 026) und insbesondere kombinierte Systeme HF-Plasma mit Magnetfeldunterstützung, geeignet.

Die Behandlungszeit kann von 0,1 sec. bis zu mehreren Minuten variiert werden, wobei Behandlungszeiten von 10 bis 360 sec. bevorzugt, von 10 bis 60 sec. besonders bevorzugt sind. Man arbeitet in der Regel bei einem Gasdruck zwischen 0,01 und 100 mbar, vorzugsweise zwischen 0,1 und 10 mbar.

Die Behandlungstemperatur kann von Raumtemperatur bis 160°C variiert werden, wobei Temperaturen zwischen 30 und 60°C besonders bevorzugt sind.

Zu Durchführung der Plasmareaktion können sowohl Inert-als auch Reaktivgase eingesetzt werden. Für das erfindungsgemäße Verfahren besonders geeignet sind $O_2$, $N_2$, He, Ar, $F_2$, $Cl_2$, $Br_2$, niedermolekulare Fluorkohlenstoffverbindungen wie $C_2F_4$, $CF_4$, Perfluorpropen und Perfluorcyclohexan, bis zu einem gewissen Grade ($C_8$) auch Alkene oder Alkane, z.B. Cyclohexen, ferner $H_2S$, $SO_3$, $SO_2$, $NH_3$, $NO_2$, $N_2O_5$ bzw. deren Mischungen untereinander.

Als gummielastische Materialien kommen beliebige, vulkanisierbare Polymerisate oder Copolymerisate von olefinisch ungesättigten Monomeren in vulkanisierter Form in Betracht, die im allgemeinen eine Glasübergangstemperatur $T_G$ von -80°C bis +40°C, vorzugsweise von -20°C bis +10°C aufweisen. Es handelt sich vorzugsweise um nichtporöse, massive Materialien. In chemischer Hinsicht handelt es sich bei den gummielastischen Materialien vorzugsweise um solche auf Basis von Polymerisaten oder Copolymerisaten von Butadien, Isopren, Styrol, Acrylnitril, Chloropren, Ethylen, Propylen und/oder Norbordien. Besonders bevorzugt handelt es sich bei den gummielastischen Materialien um solche auf Basis von Polybutadien, Polyisopren, Polychloropren, Styrol-Butadien-und Acrylnitril-Butadien-Kautschuk. Auch vulkanisierter Naturkautschuk ist gut geeignet. Es können ebenfalls Mischung derartiger Polymerisate oder Copolymerisate, gegebenenfalls auch mit anderen Polymeren zum Einsatz gelangen. In diesem Zusammenhang sei auf Polyamide, Polyurethane, Polyether, Polyester, Polyamide, Polyamidimide, Polystyrole, Polyethylene, Polyvinylchlorid und Polypropylene hingewiesen. Ihre Mengen in den Kautschukmatrices können zwischen 0,1-30 Gew.-% variiert werden. Auch halogenierte wie fluorierte, bromierte oder chlorierte Derivate der besagten Kautschuke können zur Durchführung des Verfahrens eingesetzt werden.

Kautschuke, deren Matrices Hilfsmittel wie Wärme-, Ozon-, UV-und IR-Stabilisatoren, Radikalfänger, Fungizide, organische und anorganische Füllstoffe wie Kreide, Talkum, Kaolin und $Al_2O_3$, Farbstoffe, Ruße und Pigmente enthalten, sind ebenfalls zur Durchführung des Verfahrens geeignet. Mit üblichen Hilfsmitteln vulkanisierte, gummielastische Materialien werden zur Durchführung des Verfahrens besonders eingesetzt.

Zur Herstellung der Polyurethanschaumstoff-Schicht werden erfindungsgemäß als Ausgangskomponenten verwendet

1. Aliphatische, cycloaliphatische. araliphatische. aromatische und heterocyclische Polyisocyanate, wie sie z.B. von W. Siefken in Justus Liebigs Annalen der Chemie, 362, Seiten 75-136, beschrieben werden, beispielsweise solche der Formel

$$Q(NCO)_n$$

in der

n = 2 bis 4, vorzugsweise 2 bis 3,

und

Q einen aliphatischen Kohlenwasserstoffrest mit 2 bis 18, vorzugsweise 6 bis 10 C-Atomen,

einen cycloaliphatischen Kohlenwasserstoffrest mit 4 bis 15, vorzugsweise 5 bis 10 C-Atomen,

einen aromatischen Kohlenwasserstoffrest mit 6 bis 15, vorzugsweise 6 bis 13 C-Atomen,

oder einen araliphatischen Kohlenwasserstoffrest mit 8 bis 15, vorzugsweise 8 bis 13 C-Atomen bedeuten, z.B. solche Polyisocyanate, wie sie in der DE-OS 2 832 253, Seiten 10 bis 11, beschrieben werden.

Besonders bevorzugt werden in der Regel die technisch leicht zugänglichen Polyisocyanate, z.B: das 2,4-und 2,6-Toluylendiisocyanat. sowie beliebige Gemische dieser Isomeren ("TDI"); Polyphenylpolymethylen-polyisocyanate, wie sie durch Anilin-Formaldehyd-Kondensation und anschließende Phosgenierung hergestellt werden ("rohes MDI") und Carbodiimidgruppen. Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4-und/oder 2,6-Toluylendiisocyanat bzw. vom 4,4'-und/oder 2,4'-Diphenylmethandiisocyanat ableiten.

2. Verbindungen mit mindestens zwei gegenüber Isocyanaten reaktionsfähigen Wasserstofatomen von einem Molekulargewicht in der Regel von 400 bis 10.000. Hierunter versteht man neben Aminogruppen, Thiolgruppen oder Carboxylgruppen aufweisende Verbindungen, vorzugsweise Hydroxylgruppen aufweisende Verbindungen, insbesondere zwei bis acht Hydroxylgruppen aufweisende Verbindungen, speziell solche vom Molekulargewicht 1.000 bis 6.000, vorzugsweise 2.000 bis 6.000, z.B. mindestens zwei, in der Regel zwei bis acht, vorzugsweise aber 2 bis 6, Hydroxylgruppen aufweisende Polycarbonate und Polyesteramide. wie sie für die Herstellung von homogenen und von zellförmigen Polyurethanen an sich bekannt sind und wie sie z.B. in der DE-OS 2 832 253. Seiten 11-18, beschrieben werden.

3. Gegebenenfalls Verbindungen mit mindestens zwei gegenüber Isocyanaten reaktionsfähigen Wasserstoffatomen und einem Molekülgewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19-20, beschrieben.

4. Wasser und/oder leicht flüchtige organische Substanzen als Treibmittel.

5. Gegebenenfalls Hilfs-und Zusatzmittel wie
a) Katalysatoren der an sich bekannten Art,
b) oberflächenaktive Zusatzstoffe, wie Emulgatoren und Schaumstabilisatoren,
c) Reaktionsverzögerer, z.B: sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat, ferner Stabilisatoren gegen Alterungs-und Witterungseinflüsse, Weichmacher und fungistatisch und bakteriostatisch wirkende Substanzen sowie Füllstoffe wie Bariumsulfat, Kieselgur, Ruß-oder Schlämmkreide.

Diese gegebenenfalls mitzuverwendenden Hilfs-und Zusatzstoffe werden beispielsweise in der DE-OS 2 732 292, Seiten 21-24, beschrieben.

Weitere Beispiele von gegebenenfalls erfindungsgemäßen mitzuverwendenden oberflächenaktiven Zusatzstoffen und Schaumstabilisatoren sowie Zellreglern, Reaktionsverzögerern, Stabilisatoren. flammhemmende Substanzen, Weichmachern, Farbstoffen und Füllstoffen sowie fungistatisch und bakteriostatisch wirksamen Substanzen sowie Einzelheiten über Verwendungs-und Wirkungsweise dieser Zusatzmittel sind im Kunststoff-Handbuch, Band VII, herausgegeben, von Vieweg und Höchtlen, Carl-Hanser-Verlag, München 1966, z.B: auf den Seiten 103-113 beschrieben.

Vorzugsweise handelt es sich bei den Schaumstoffschichten der erfindungsgemäßen Verbundsysteme um solche auf Basis von halbharten Polyurethanschaumstoffen des Dichtebereichs 0.2 - 0,8, vorzugsweise 0,3 - 0,5 g/cm$^3$ und einer Härte Shore A von 30 bis 90, vorzugsweise 40 bis 60.

Die Verbindung zum Verbundmaterial erfolgt in der Regel gleichzeitig mit der Herstellung des Polyurethans. Die Reaktionskomponenten werden dabei nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B: auf den Seiten 121-205, beschrieben.

Das Anschäumen der Polyurethanschaumstoff-Schicht kann unter üblichen Bedingungen, beispielsweise zwischen Raumtemperatur und 150°C, vorgenommen werden. Der Arbeitsdruck kann zwischen dem normalen Atmosphärendruck und 5 bar variiert werden, wobei die Arbeitsdrucke zwischen 0,7 bis 1,5 bar bevorzugt sind.

Selbstverständlich können schäumfähige Polyurethansysteme, die anorganische und organische Füllstoffe wie $TiO_2$, Kaolin, Gips, Talkum und Kreide, Pigmente, Farbstoffe, PU-Katalysatoren, PU-Hitze-und UV-Stabilisatoren und Fungizide enthalten, zur Durchführung des Verfahrens eingesetzt werden.

Die Schichtdicke der Polyurethanschaumstoff-Schicht kann je nach dem Anwendungsfall zwischen 1 bis 50 mm, vorzugsweise zwischen 2 und 20 mm, variiert werden. Für das erfindungsgemäße Verfahren besonders geeignet sind Folien, Platten bzw. Formkörper und Profile, die kontinuierlich durch das Plasma geführt werden können. Ein diskontinuierlicher Betrieb ist jedoch ebenfalls möglich.

Die erfindungsgemäßen Verbundsysteme finden z.B. als Schuhsohlen und Dämmstoffe (z.B. für Schallschutz) Anwendung.

Beispiel 1

Handelsübliche Gummiplatten der Fa. Metzeler, D-8000 München, vom Typ STX 89 auf Basis eines Gemischs aus Polybutadien und Naturkautschuk mit den Abmessungen von 100 × 150 × 2 mm, werden mit Waschbenzin vorgereinigt und auf die untere Elektrode des HF-Plasmareaktors gelegt. Der Plasmareaktor wird mit technischem Argon gespült, anschließend auf einen Druck von ~0,6 mbar evakuiert und das Ar-Plasma gezündet. Die Arbeitsfrequenz des Plasmasystems beträgt 27,12 MHz, die Elektrodentemperatur ~30°C und die Leistung ~140 Watt. Die Proben werden nach einer Reaktionszeit von ca. 45 sec. aus dem Reaktor entfernt. Hierauf wird direkt - ohne naßchemische Ätzbehandlung - ein handelsübliches - schäumfähiges Polyurethan-Reaktionsgemisch, welches unter Ausbildung eines Schaumstoffs der Dichte 0,4 g cm$^3$ und einer Shore A Härte von 50 aufschäumt, aufgebracht. Bei dem Reaktionsgemisch handelt es sich um ein Gemisch aus einer Polyolkomponente und einer Polyisocyanatkomponente.

Polyolkomponente: 88,7 Gew.-Teile einesPolyesterpolyols des Molekulargewichts 2000 aus Adipinsäure, Ethylenglykol und 1,4-Dihydroxybutan (Molverhältnis der Diole: 70 : 30)
8,0 Gew.-Teile Ethylenglykol
0,5 Gew.-Teile Wasser
0,5 Gew.-Teile Triethylendiamin
0,55 Gew.-Teile eines handelsüblichen Polysiloxanstabilators (Stabilisator DC 193 der Fa. Dow Corning).

Polyisocyant-Komponente: 90,0 Gew.-Teile eines NCO-Prepolymeren aus
62 Gew.-Teilen 4,4′-Diisocyanatdiphenolmethan und
38 Gew.-Teilen des in des Polyolkomponente verwendeten Polyesterdiols.

Das Polyurethan-Reaktionsgemisch wird in einer solchen Menge aufgetragen, daß sich eine Schaumstoffschicht einer Dicke von 10 mm bildet.

Man bekommt ein Polyurethan-Gummiverbundsystem mit guter Haftung. Die Haftung der Polyurethanschaumstoff-Schicht - ermittelt nach DIN 53 357 - beträgt ca. 35 N/cm.

Beispiel 2

Handelsübliche Gummiplatten de Fa. Metzeler, D-8000 München, vom Typ STY 80 auf Basis eines Gemischs aus Polybutadien, Styrol-Butadien-und Naturkautschuk mit den Abmessungen von 100 × 150 × 2 mm werden mit Ligorin vorgereinigt und dann nach Beispiel 1 plasmabehandelt; darauf wird analog zu Beispiel 1 die dort genannte Polyurethanschaumstoff-Schicht angeschäumt.

Man erhält ein Polyurethan-Gummiverbundsystem mit guter Haftung. Die Haftung der Polyurethanschaumstoff-Schicht - ermittelt nach DIN 53 357 - beträgt ca. 40 N/cm.

Beispiel 3

Die in Beispiel 1 angegebenen handelsüblichen Gummiplatten werden mit technischem Petrolether vorgereinigt, nach Beispiel 1 unter Helium im Verlaufe von 90 sec. plasmabehandelt und dann aus dem Reaktor entfernt. Nach einer Lagerung von

~24 Stunden wird mit einem handelsüblichen - schäumfähigen Polyurethan-Reaktionsgemisch auf Basis eines herkömmlichen Polyethers auf der Basis von Propylenoxid mit der mittleren Molmasse von ca. 2000 und MDI eine Polyurethanschaumstoff-Schicht von 10 mm Dicke angeschäumt. Der Schaumstoff weist eine Dichte von 0,35 g/cm$^3$ und eine Härte Shore A von 50 auf.

Zur Herstellung des Polyurethanschaums wurde folgendes Reaktivsystem eingesetzt:

Polyolkomponente: 56,3 Gew.-Teile eines Polyetherpolyols der OH-Zahl 28, hergestellt durch Propoxylierung von Propylenglykol und anschließende Ethoxylierung des Propoxylierungsprodukts (Gewichtsverhältnis PO:EO = 70:30).
28,2 Gew.-Teile eines Polyetherpolyols der OH- Zahl 27, hergestellt durch Propoxylierung von Trimethylolpropan und anschließender Ethoxylierung des Propoxylierungsprodukts (Gewichtsverhältnis PO : EO = 78 : 22).
8,2 Gew.-Teile Ethylenglykol
3,3 Gew.-Teile Diethylenglykol
1,0 Gew.-Teil Wasser
1,0 Gew.-Teil Triethanolamin
0,4 Gew.-Teile Triethylendiamin
0,3 Gew.-Teile des in Beispiel 1 verwendeten Siloxanstabilisators.

Polyisocyant-komponente: 104 Gew.-Teile des in Beispiel 1 beschriebenen NCO-Prepolymeren.

Man erhält ein Polyurethan-Gummiverbundsystem mit einer Polyurethanschaumstoff-Schicht guter Haftung. Die Haftung der Polyurethanschaumstoff-Schicht - ermittelt nach DIN 53 357 - beträgt ca. 35 N/cm.

Beispiel 4

Handelsübliche Gummiplatten der Fa. Metzeler, D-8000 München, vom Typ BWN 7 auf Bais von Polybutadien mit den Abmessungen von 100 $^\times$ 150 $^\times$ 2 mm werden mit 1,1,2-Trichlor-1,2,2-trifluorethan vorbehandelt und dann nach Beispiel 1 plasmabehandelt bzw. nach Beispiel 1 mit der dort beschriebenen Polyurethanschaumstoff-Schicht versehen.
Man bekommt ein Polyurethan Gummiverbundsystem mit einer guten Haftung. Die Haftung der Schaumstoffschicht - ermittelt nach DIN 53 357 - beträgt ca. 40 N/cm.

Beispiel 5

Die nach Beispiel 4 plasmabehandelte Gummiplatten werden ca. 24 Stunden gelagert und dann nach Beispiel 1 mit der dort beschriebenen Polyurethanschaumstoff-Schicht versehen.
Man bekommt ein Polyurethan-Gummiverbundsystem mit einer guten Haftung. Die Haftung der Polyurethanschaumstoff-Schicht - ermittelt nach DIN 53 357 - beträgt ca. 35 N/cm.

Beispiel 6

Handelsübliche Gummiplatten der Fa. Metzeler, D-8000 München, vom Typ WC 51 auf Basis eines Gemischs aus Styrol-Butadien - und Polyisopropen-Kautschuk mit den Abmessungen von 100 $^\times$ 150 $^\times$ 2 mm werden mit CCl$_2$ = CCl$_2$ vorgereinigt und dann mit O$_2$-Plasma nach Beispiel 1 im Verlaufe von 120 sec. behandelt. dem Reaktor entnommen und anschließend nach Beispiel 1 mit der dort beschriebenen Polyurethanschaumstoff- Schicht versehen.
Man bekommt ein Polyurethan-Gummiverbundsystem mit einer guten Haftung. Die Haftung der Schaumstoffschicht - ermittelt nach DIN 53 357 - beträgt ca. 35 N/cm.

Beispiel 7

Die im Beispiel 6 angegebenen Gummiplatten werden mit einem Gemisch aus Ethanol und Aceton vorgereinigt. nach Beispiel 1 unter O$_2$ im Ver- laufe von 90 sec. plasmabehandelt und dann nach Beispiel 3 mit der dort beschriebenen Polyurethanschaumstoff-Schicht versehen.
Man bekommt ein Polyurethan-Gummiverbundsystem mit einer guten Haftung. Die Haftung der Schaumstoffschicht - ermittelt nach DIN 53 357 - beträgt ca. 35 N/cm.

**Ansprüche**

1. Verfahren zur Herstellung eines Verbundsystems aus einem gummielastischen Material und einer Polyurethanschaumstoff-Schicht, dadurch gekennzeichnet, daß man die Oberfläche des gummielastischen Materials einer Plasmabehandlung aussetzt und danach an sie eine Polyurethanschaumstoff-Schicht anschäumt.
2. Verfahren nach Anspruch 1, dadurch gekennzeichnet, daß man die Oberfläche des gummielastischen Materials vor der Plasmabehandlung mit einem nicht ätzenden Lösungsmittel entfettet.

3. Verfahren nach Anspruch 1 und 2, dadurch gekennzeichnet, daß die Plasmabehandlung im Hochfrequenz-Plasma, mit Mikrowellen oder in einem kombinierten Hochfrequenz-Plasma mit Magnetfeldunterstützung vorgenommen wird.

4. Verfahren nach Anspruch 1 - 3, dadurch gekennzeichnet, daß man als gummielastische Materialien solche einer Glasübergangstemperatur $T_G$ von -80°C bis +40°C und als Polyurethanschaumstoff-Schicht eine solche auf Basis eines Polyurethans der Dichte 0,2 - 0,8 g/cm$^3$ und einer Härte Shore A von 30 - 90 verwendet.

5. Verfahren nach Anspruch 1 bis 4, dadurch gekennzeichnet, daß als Plasmagase Ar, He, $O_2$, $O_3$, $N_2$, $SO_3$, $SO_2$, $CF_4$ oder $CF_2 = CF_2$ bzw. deren Mischungen untereinander eingesetzt werden.

6. Verbundsysteme aus einem gummielastischen Material und einer Polyurethanschaumstoff-Schicht, erhältlich nach den Verfahren gemäß Ansprüchen 1 bis 5.

7. Verwendung der Verbundsysteme gemäß Anspruch 6 zur Herstellung von Schuhsohlen.

8. Verwendung der Verbundsysteme gemäß Anspruch 6 als Dämmstoffe.